Europäisches Patentamt

European Patent Office

Office européen des brevets

(11) Publication number: **0 259 277**
**A1**

## (12) EUROPEAN PATENT APPLICATION

(21) Application number: 87830270.2

(22) Date of filing: 15.07.87

(51) Int. Cl.⁴: **F 02 D 1/16**
// F16D3/10, F16D3/04

(30) Priority: 22.07.86 IT 6759386

(43) Date of publication of application:
09.03.88 Bulletin 88/10

(84) Designated Contracting States:
AT BE CH DE ES FR GB IT LI SE

(71) Applicant: WEBER S.r.l.
Corso Marconi, 20
I-10125 Torino (IT)

(72) Inventor: Filippi, Renato
Via Palestrina 4
I-10042 Nichelino (Torino) (IT)

Sfarzetta, Mario
Traversa Madonna delle Grazie 13
I-70027 Palo Del Colle (Bari) (IT)

(74) Representative: Notaro, Giancarlo et al
c/o Jacobacci-Casetta & Perani S.p.A. Via Alfieri, 17
I-10121 Torino (IT)

(54) Device for regulating the injection advance in a compression ignition internal combustion engine.

(57) A device for regulating the injection advance in a compression ignition internal combustion engine, provided with an injection pump which controls the fuel supply to a series of injector devices associated with the cylinders of the engine, comprises two members (1,7) intended to be connected for rotation with the drive shaft and the shaft of the injection pump respectively and means for connecting these members for rotation and includes a regulating device operating by the centrifugal effect to vary the relative angular positions of these members as their rates of rotation vary. The centrifugal-effect regulating device comprises a pair of centrifugal masses (12, 13) connected for rotation with the two members (1,7) and free to slide under the centrifugal effect in two substantially straight, opposite directions from a rest position in which they are close together and towards which they are biased by resilient means (19,20). Each centrifugal mass (12, 13) has two associated sliding guide blocks (10, 11) which are slidable in two guide channels (21) formed in the centrifugal mass (12, 13) and, at the same time, are freely rotatable on two pins (8,9) parallel to, and spaced from the axis of rotation of the device and carried respectively by the two members (1,7) of the device. The said guide channels (21) extend along straight lines which converge radially inwardly so that the movement of each mass (12, 13) which is caused by the centrifugal effect causes a variation in the relative angular positions of the two pins (8,9) and a consequent variation in the relative angular positions of the two members (1,7) of the device.

FIG. 1

## Description

Device for regulating the injection advance in a compression ignition internal combustion engine

The present invention relates to devices for regulating the injection advance in a compression ignition internal combustion engine, provided with an injection pump which controls the fuel supply to a series of injector devices associated with the cylinders of the engine. In particular, the invention relates to injection advance regulating devices of known type comprising:

a first member intended to be rotated by the drive shaft,

a second member intended to be connected to the shaft of the injection pump, and

means for connecting the two members together for rotation, including a regulating device operating by the centrifugal effect to vary the relative angular positions of the members as their rates of rotation vary.

A device of the type specified above is described and illustrated, for example, in Italian Patent Application No. 68513-A/79 of 20th July 1979, as well as in the corresponding German Patent Application No. 3 021 094 and in the corresponding French Patent Application No. 2 461 817.

The object of the present invention is to provide a device of the type specified above which is less bulky and more reliable than prior art devices.

In order to achieve this object, the invention provides a device of the type specified at the beginning of the present description, characterised in that it includes:

a pair of centrifugal masses connected for rotation with the aforesaid members, and free to slide under the centrifugal effect in two substantially straight, opposite directions from a rest position in which they are close together,

resilient means associated with the two centrifugal masses and urging them into their rest position close together,

a pair of sliding guide blocks associated with each centrifugal mass and slidable in two guide channels formed in the centrifugal mass and freely rotatable on two pins parallel to and spaced from the axis of rotation of the device, the pins being carried by the first and second members of the device respectively,

the two guide channels extending along two straight lines which converge radially inwardly so that the movement of each mass, which occurs due to the centrifugal effect during rotation of the devices, causes a variation in the relative angular positions of the two pins and a consequent variation in the relative angular positions of the two members of the device.

The present invention will now be described with reference to the appended drawings, provided purely by way of non-limiting example, in which:

Figure 1 is an exploded perspective view of a preferred embodiment of the device according to the invention,

Figure 2 is a partially-sectioned front view of the device of Figure 1,

Figure 3 is a section taken on the line III-III of Figure 2, and

Figure 4 is a section taken on the line IV-IV of Figure 3.

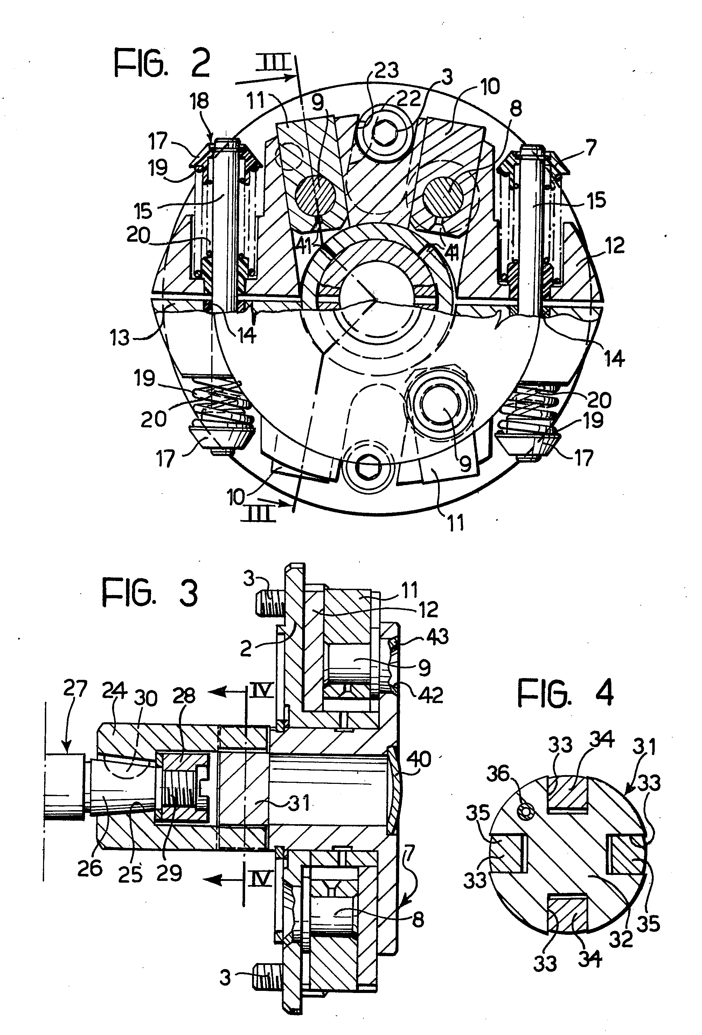

The drawings illustrate a device which can be inserted in the connection between the shaft of a diesel engine and the shaft of the injection pump associated with the engine to regulate the injection advance automatically as the speed of the engine varies. The device includes a first member 1 consisting of a disc 2 intended to be fixed by means of a pair of bolts 3 to the annular body of a gearing system (not illustrated) which is rotated by the engine. The disc 2 has a central cylindrical hub 4 within which is rotatably mounted a hub 5 extending from a disc 6 forming part of a second member 7 intended to be connected for rotation with the shaft of the pump. As illustrated in Figure 3, in the assembled condition of the device, the disc 6 abuts the end surface of the hub so that the facing surfaces of the two discs 2, 6 are parallel and facing. On these surfaces, the two discs 2, 6 each have a pair of diametrally-opposed pins (indicated 8 and 9 respectively) extending parallel to the axis of rotation of the device and positioned at equal distances from the axis. Sliding guide blocks 10, 11 (which function as described below) are freely rotatably mounted on the pins 2, 9. Two masses 12, 13 are situated in the space between the two discs 2, 6. The masses 12, 13 have two pairs of holes 14 extending in two parallel directions contained in a plane perpendicular to the axis of rotation of the device. Two rods 15 are slidably mounted in the holes 14 with the interposition of bushes 16 of plastics material. An annular element 17 of plastics material is also fixed to each end of each shaft 15 and is retained on the rod 15 by a spring clip 18. As clearly illustrated in Figure 2, two helical springs 19, 20 are interposed between the facing surfaces of each annular element 17 and the respective mass. The two masses 12, 13 have two facing concave cylindrical surfaces 12a, 13a. The action of the helical springs 19, 20 associated with the two rods 15 biases the masses 12, 13 into a position in which they are close together, and in which their surfaces 12a, 13a press on opposite sides of the external surface of the hub 4 of the member 1 of the device.

Each of the two masses 12, 13 has two guide channels 2 in its two opposite faces, in which a sliding guide block 10 carried by the first member 1 and a sliding guide block carried by the second member 7 are respectively slidable. As can be seen from Figure 2, the two guide channels 21 associated with each of the two masses 12, 13 extend along two straight lines which converge radially inwardly. In the example illustrated, these two lines are at a smaller angle to each other than the angle between two radial lines passing through the axis of rotation of the device and through the two axes of the pins 8, 9.

As will be explained in greater detail below, during rotation of the device, the two masses 12, 13 move radially outwardly due to the centrifugal effect,

**0 259 277**

overcoming the action of the springs 19, 20. Each of the two masses 12, 13 also has a slot 22 in one of its faces in which the head of a respective bolt 3 is engaged during movement of the centrifugal mass. Each mass also has a recess 23 in its periphery which allows access to the respective bolt 3 when the two masses are in their rest position beside the hub 4.

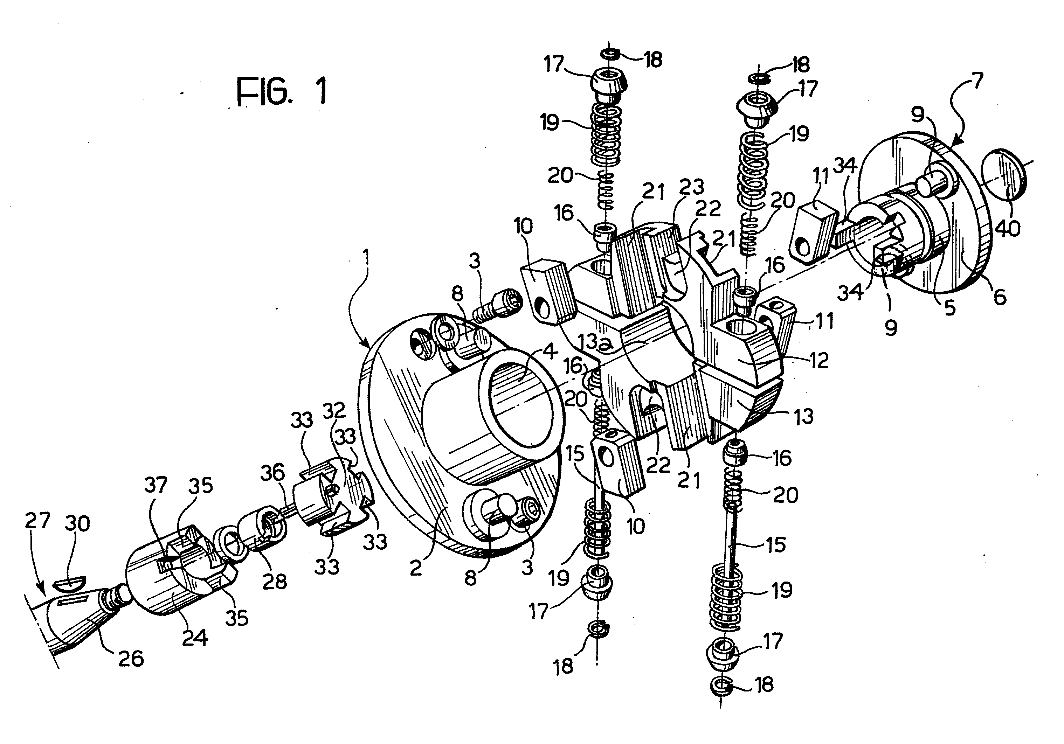

The second member 7 of the device is connected for rotation with the hub 24 which can be connected to one end of the shaft of the injection pump. For this purpose, the hub 24 has a conical hole 25 engaged by a conical portion 26 of the shaft 27 of the injection pump (see Figures 1, 3). The conical portion 26 is locked within the conical seat 25 by means of a nut 28 screwed onto a threaded end portion 29 of the shaft 27 of the injection pump. This shaft is also connected for rotation with the hub 24 by means of a key 30.

The second member 7 is connected to the hub 24 by means of a cross coupling (Figures 1, 4) which allows the shaft of the injection pump to be connected to the member 7 of the device even when the axes of these elements are slightly out of line with each other. The cross coupling 31 has a cross-shaped element 32 with four equiangularly spaced seats 33 engaged by a first pair of diametrally-opposite axial teeth 34 projecting from the hub 5 of the member 7 and a second pair of diametrally-opposite axial teeth 35 projecting from the connecting hub 24.

With reference to Figure 4, the distance between the inner, facing surfaces of the pair of teeth 34 and of the pair of teeth 35 is slightly greater than the distance between the axial bottom surfaces of each pair of opposing cavities 34. By virtue of this characteristic, the two hubs 5, 24 can be positioned with their axes offset relative to each other. This facilitates assembly of the device in that it allows assembly to be carried out without the device being pre-arranged in a position exactly coaxial with the shaft of the injection pump which is associated with the engine to which the device is fitted.

The cross-shaped element 32 is provided with an axial pin 36, spaced from the axis of the element with ends projecting from the two opposite faces of the latter to engage in frontal cavities 37, 38 formed in the end surfaces of the hub 24 and the hub 5 (Figure 1). The pin 36 acts as a reference element for the correct angular positioning of the member 7 with respect to the shaft of the injection pump. The sliding surfaces of the various movable parts of the device are lubricated with lubricant (oil or grease) placed in the internal cavity 39 of the hub 5 (this cavity is closed by a snap mounted cover 40). The lubricant is transmitted to all the sliding surfaces through holes 41 formed in the two hubs 5, 4 and in the sliding guide blocks 10, 11.

When the engine is running, the disc 2 of the first member 1 of the device is rotated by the engine. The disc 2 rotates the respective two sliding guide blocks 10 which, as a result of their engagement in the guide channels 21, in their turn rotate the two centrifugal masses 12, 13, about the axis of the device. The centrifugal masses 12, 13 in turn rotate the two sliding guide blocks 11 about the axis of the device and these rotate the disc 6 of the second member 7 and, through the cross coupling 31 and the hub 24, the shaft of the injection pump. As a result of their rotation, the masses 12, 13 move, under the centrifugal effect, in opposite directions, away from the hub 4, overcoming the action of the springs 19, 20.

With reference to Figure 2, the displacement of each of the two centrifugal masses causes the two pins 8, 9 associated with each mass to approach each other. As the rate of rotation of the engine varies, therefore, the relative angular positions of the two discs 2, 6 is varied, which causes a corresponding variation in the relative angular positions of the disc 2 connected to the engine and the shaft 27 of the injection pump. During the design phase, the inclination of the guide channels 21 is selected in such a way as to obtain the required law of variation of the angular position of the shaft of the injection pump with variation in the rate of rotation of the engine. This allows the injection advance to be regulated automatically in accordance with any desired law.

The device according to the invention has the advantage of a smaller bulk than that of known devices in which the two centrifugal masses are rotatably supported on the body of the device. At the same time, a further typical disadvantage of devices with articulated centrifugal masses, which consists of wear of the bushes and articulating pins for the masses, is avoided.

Naturally, the principle of the invention remaining the same, the details of construction and forms of embodiment can be varied widely with respect to those described and illustrated purely by way of example, without thereby departing from the scope of the present invention.

For example, Figure 3 illustrates an example of the connection of a pin 9 to the respective disc 6 by means of the plastic deformation of a tubular end 42 of the pin 9 against a conical seat 43 formed in the disc 6. Obviously, the connection of the pins to the respective discs could be achieved by any other connection means.

**Claims**

1. A device for regulating the injection advance in a compression ignition internal combustion engine, provided with an injection pump which controls the fuel supply to a series of injector devices associated with the cylinders of the engine, the device comprising:

a first member (1) intended to be rotated by the drive shaft,

a second member (7) intended to be connected to the shaft (27) of the injection pump, and

means for connecting the two members (1,7) together for rotation including a regulating device operating by the centrifugal effect to vary the relative angular positions of these members as their rate of rotation varies,

characterised in that the centrifugal-effect regulating device includes

a pair of centrifugal masses (12, 13) connected for rotation with the two members (1,7) and free to slide under the centrifugal effect in two substantially straight, opposite directions from a rest position in which they are close together,

resilient means (19,20) associated with the two centrifugal masses (12, 13) and urging them into their rest position close together,

a pair of sliding guide blocks (10, 11) associated with the two centrifugal masses (12, 13) slidable in two guide channels (21) formed in the centrifugal mass and freely rotatable on two pins (8,9) parallel to, and spaced from, the axis of rotation of the device, the pins being carried by the first and second members (1,7) of the device respectively,

the two guide channels (21) extending along straight lines converging radially inwardly so that the movement of each mass (12, 13), which occurs due to the centrigual effect, causes a variation in the relative angular positions of the two pins (8,9) and a consequent variation in the relative angular positions of the two members (1,7) of the device.

2. A regulation device according to Claim 1, characterised in that the first member (1) of the device comprises a disc (2) including a central cylindrical hub (4) and in that the second member (7) of the device also comprises a disc (6) including a central cylindrical hub (5) rotatably mounted within the hub (4) of the first member (1), the discs (2,6) of the two members (1,7) of the device having spaced-apart, parallel, facing surfaces which each carry two of the axial pins (8,9) in diametrally-opposite positions, and in that the two centrifugal masses (12,13) are interposed between the two discs (2,6) and have two facing surfaces (12a, 13a) which are urged against the hub (4) of the first member (1) by the resilient means (19,20).

3. A regulation device according to Claim 2, characterised in that the two facing surfaces (12a, 13a) are concave cylindrical surfaces.

4. A regulation device according to Claim 1, characterised in that the two centrifugal masses (12,13) have two pairs of holes (174) extending in two parallel directions contained in a plane perpendicular to the axis of rotation of the device and in that two guide rods (15) are slidably mounted within these holes, the resilient means being interposed between an abutment member (17) associated with each end of each guide rod (15) and the surface of the respective centrifugal mass (12, 13).

5. A regulation device according to Claim 2, characterised in that an auxiliary hub (24) is provided for connecting the hub (5) of the second member (7) of the device to the shaft (27) of the injection pump, and in that a cross coupling device (31) is interposed between the second member (7) and the connecting hub (24), which allows the axis of the second member (7) to be slightly out of alignment with that of the shaft of the injection pump.

6. A regulation device according to Claim 5, characterised in that the cross coupling device (31) comprises a cross-shaped element (32) having, in its periphery, four equiangularly-spaced axial slots (33) which are engaged by a pair of diametrally-opposite axial teeth (34) carried by the hub (5) of the second member (7) and by a pair of diametrally-opposite axial teeth (35) which are carried by the auxiliary connecting hub (24) respectively.

FIG. 1

0259277

0259277

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 062 610  (SIMMS) <br> * Page 1, line 37 - page 3, line 9; figures 1,2 * | 1-3 | F 02 D    1/16 // <br> F 16 D    3/10 <br> F 16 D    3/04 |
| X | FR-A-1 179 449  (LA PRECISION MECANIQUE) <br> * Page 1, paragraph 12 - page  2, paragraph 12; figures 1-4 * | 1-4 | |
| A | GB-A-1 037 824 (THOMSON-HOUSTON) <br> * Page  1,  lines 10-16; page 2, line 92 - page 3, line  78;  fig-ures 2-6 * | 5,6 | |

TECHNICAL FIELDS SEARCHED (Int. Cl.4)

F 02 D
F 16 D

The present search report has been drawn up for all claims

| Place of search | Date of completion of the search | Examiner |
|---|---|---|
| THE HAGUE | 02-11-1987 | HAKHVERDI M. |

EPO Form 1503 03.82